# EUROPEAN PATENT APPLICATION

(11) **EP 1 785 919 A1**
(43) Date of publication of application: **16.05.2007**
(21) Application number: 05077562.6
(22) Date of filing: 10.11.2005
(51) Int. Cl.: G06Q 10/00

(54) **Supply chain management system**

(71) Applicant: SAP AG, 69190 Walldorf (DE)
(72) Inventor: Esau, Andreas, 76684 Östringen (DE); Helmolt, Hans-Ulrich, 69121 Heidelberg (DE); Hirth, Gerhard, 69234 Dielheim (DE); Mayer, Thomas, 69181 Leimen (DE)
(74) Representative: Winckels, Johannes Hubertus F.

(57) **Abstract**

The invention relates to a system for automatically providing one or more event driven global available to promise services in a supply chain, the system comprising:
an inbound interface for interfacing with a plurality of data storage devices in at least one of which one or more documents are stored as data, wherein the one or more documents correspond to an activity;
an execution memory operable to hold a software system; and
a processor for coupling to the inbound interface and the execution memory, the processor being operable to execute the software system such that the software system operates:
to assign the activity to a follow up process on the basis of a condition profile.

## Description

The invention relates to a system for automatically providing one or more event driven global available to promise services in a supply chain, a computer implemented method, a user terminal and a computer readable storage medium.

Supply chain management software systems are known, for example, SAP's Supply Chain Management system. Such a supply chain management system includes a plurality of applications for implementing the management of the supply chain. These applications are for example SAP Advanced Planning and Optimization (SAP APO) and Extended Warehouse Management (EWM). A core interface (CIF) connects SAP SCM with online transaction processing systems (OLTP), such as SAP Customer Relations Management (SAP CRM) and Enterprise Resource Planning (ERP). In particular, the core interface connects the OLTP to the SAP APO. In supply chain management, when a product is available to be promised to a customer it is "available to promise" (ATP). Supply chain management systems including available to promise (ATP) functionality are known. Supply Chain Management applications, such as SAP APO include ATP functionality. Such systems include software for determining whether a product is available to promise. The determination may include performing an availability check when a customer calls to place an order.

Document data from the OLTP system, for example, the sales orders data, are stored in databases, such as LiveCache and several other database tables in SAP SCM.

Activities, for example, changes in stock, confirmation of high priority order, etc, influence the ATP situation. In some cases, it is necessary to trigger one or more follow-up processes, which profit as a result of the changed ATP situation or correct it. Each activity possesses a bundle of characteristics, which determine the necessity and type of the follow-up process. In conventional systems, there is no possibility given to trigger a subsequent process steep immediately and additionally depending on activity characteristics.

It is desirable to address those drawbacks identified in conventional systems. In particular, it is desirable to improve the availability check. It is further desirable to be able to react to changes caused by a specific activity.

To address the above mentioned problems, there is provided according to a first aspect of the invention, a system for automatically providing one or more event driven global available to promise services in a supply chain, the system comprising:
an inbound interface for interfacing with a plurality of data storage devices in at least one of which one or more documents are stored as data, wherein the one or more documents correspond to an activity;
an execution memory operable to hold a software system; and
a processor for coupling to the inbound interface and the execution memory, the processor being operable to execute the software system such that the software system operates:
   to assign the activity to a follow up process on the basis of a condition profile.

Using event driven global available to promise services, it is possible to react in real time to changes caused by a specific application. It is possible to execute a subsequent process, which can be triggered immediately or be postponed until the individual start delay is reached. It is also possible to make the start of the subsequent process depending on particular parameter values, which can differ from application to application and from time to time. A further advantage is that the document category in a specific inbound process can be changed and influence the results of an availability check.

According to a second aspect of the invention, there is provided a computer implemented method of automatically providing one or more event driven global available to promise services in a supply chain, the method comprising:
interfacing with a plurality of data storage devices in at least one of which one or more documents are stored as data, wherein the one or more documents correspond to an activity;
holding a software system in an execution memory; and
coupling the inbound interface and the execution memory, the processor being operable to execute the software system such that the software system assigns the activity to a follow up process on the basis of a condition profile.

According to a third aspect of the invention, there is provided a user terminal comprising means operable to perform the method of claim 9.

According to a fourth aspect of the invention, there is provided a computer readable storage medium storing a program which when run on a computer controls the computer to perform the method of claim 9.

By way of example only, embodiments of the present invention will now be described with reference to the accompanying Figures in which:
Figure 1 shows event driven services in supply chain management according to embodiments of the invention, and
Figure 2 shows back order processing (BOP) and its triggering events. Like reference numerals indicate like elements.

As mentioned, SAP CRM or ERP are OLTP systems. SAP CRM and ERP are systems for the daily online transaction processing, where, for example, the sales orders are entered. SAP APO is a component of SAP SCM. SAP APO is a logistic planning system. ATP is a component of SAP APO. A core interface CIF connects the OLTP to the SAP APO. It provides functions to transfer the business data between the two types of systems. An availability check is carried out when a customer enquires about placing an order. ATP is the component that executes the availability check. The availability check takes into account existing stock and also the quantities of future incoming or outgoing orders that should be delivered by the date of the order to determine whether the product is available to promise. If a quantity (of stock or an incoming order) is promised to a first customer, a second customer cannot access the reserved quantity. If there is not enough quantity to honor a complete order as requested, the order can be confirmed at a later date or may stay unconfirmed respectively partially confirmed.

Further, in a situation where there are several orders which cannot all be confirmed, those order which cannot be confirmed become back orders. Back orders are sales documents whose order items cannot be completely confirmed as requested due to lack of availability or material shortages. Orders, including back orders, may be assigned a priority rating. For example, a high priority order and a low priority order. If a high priority order cannot be confirmed immediately, it becomes a back order. Back order processing (BOP) is a technical vehicle for dealing with back orders. BOP is a tool of the ATP component, for example in SAP APO. Using BOP, an available quantity of one or more products can be reallocated using a quantity of selected requirements. BOP may be carried out as interactive BOP or batch BOP. A processor 3, such as a back order kernel 3 carries out the back order processing which includes carrying out an availability check including RBA. At first the process decides which items of the back order are to be checked and in which sequence. In order to do this a filter is defined. The filter has a filter type which defines which criteria are used to select the items to be processed. Criteria are for example, such as, customer type, product/location, item type (for example, sales order). The filter also has a filter variant which defines which values of defined criteria meet the conditions of the filter. The order items are stored in the OLTP system. They may also be stored in SAP APO. The filtering selects items corresponding to the particular filter to the particular data base. For example, the filter type may define a parameter - customer type. The filter variant may define the parameter value - customer type - very important or medium. In this way, the filter is defined. This filter then selects only items having a very important and medium important customer. In one embodiment, the filter can be designed to define back orders.

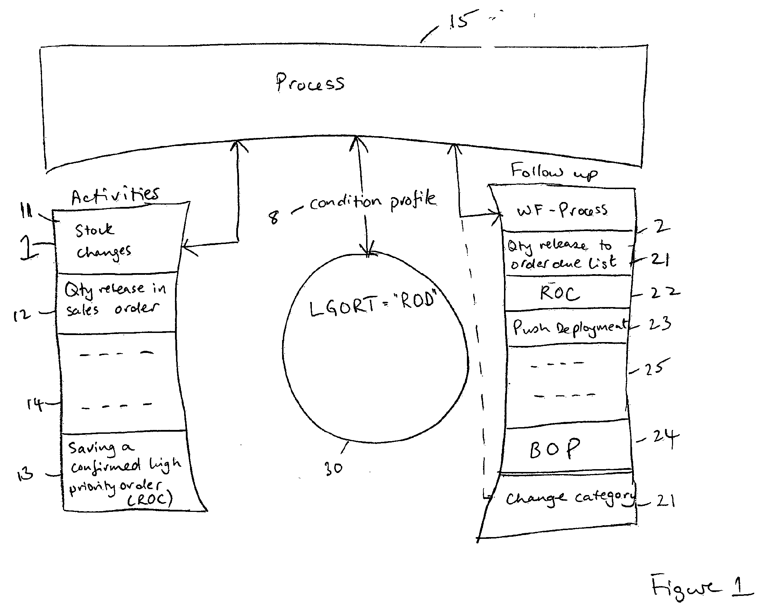

According to an embodiment of the present invention, one or more event driven global ATP services are provided. Event driven global ATP services may be used for example in event driven quantity assignment and in reassignment or order confirmations. Event driven services are shown in Figure 1. In particular, Figure 1 shows event driven services in supply chain management according to embodiments of the invention.

Using event driven global available to promise services in supply chain management systems, such as SAP SCM, it is possible to assign an activity 1, which reflects a specific application, to a follow-up process 2. For example, the following activities are supported: changes in stock, changes in a purchase order 11, confirmation of a high priority sales order including saving a confirmed high priority order (ROC) 13, quantity release in a sales order 12. Further activities 14 may also be supported. Event driven services allow to define individual process categories 15, where a follow-up process step 2 can be assigned to the activity 1 and conditions 8 for its triggering can be defined. Depending on the activity 1, there is a parameter catalogue available, which is used for the definition of triggering conditions.

In general, there are two types of follow-up process steps 2:
1. Change the category of a document 21. In particular, this may be carried out, if the activity 1 is an inbound process like changes in stock 11, for example, as found in SAP SCM. A corresponding category profile describes how the document category can be changed. The change of category follow up process is linked to a change in stock in order to reserve the change in stock so that it is not visible in an availability check.
2. Raising an event 2 for a subsequent process. The following events 2 are supported: quantity release to order due lists 21, order confirmation at the cost of other documents (ROC) 22, push deployment 23 and backorder processing 24. Further events 2, 25 may also be supported. It is possible to start the subsequent process 2 immediately or with a specified delay. The subsequent process 2 uses a work list, which is prepared by event driven services. The work list may be a list of location products with corresponding available quantity changes. Alternatively, the work list may be a list of document items to be processed. In Figure 1, "LGORT" = "ROD", refers to the storage location, "received on dock".

Event driven services have application at least one of event driven quantity assignment (EDQA) and reassignment order confirmation (ROC). In event driven quantity assignment (EDQA) back order processing including global ATP is used as an internal tool. If several orders cannot be confirmed and a quantity is received that the system can assign, back order processing is begun. For example, if a sales order is cancelled, the released quantity can be reassigned. Such a quantity assignment is called EDQA. In addition to be the cancellation of an order, the event may include incoming stock and a changed order. In reassignment of order confirmation (ROC), if a very important order for a very important customer is created or changed and no quantity is available, quantities can be "stolen" from unimportant orders even if they are confirmed. For example, for orders that may be defined as a low priority order, their quantities may be reassigned to high priority orders. ROC is generally not carried out in a batch process. It may be done independently of back order processing. It may be carried out on line. EDQA and ROC use order due lists (ODL) which are described in more detail hereinafter. Order due lists use a filter to select orders. The ODL filtering is used if the order is saved. At the time that the order item is saved, all filters of order due lists are scanned. If an ODL is activated, it is being filled by the system via inbound interface with corresponding OLTP documents.

ODLs provide an index function, and allow affected items to be stored immediately after being saved. In this way, affected items can be retrieved also quicker than in conventional systems.

The ODL is an additional data base element. It has a restricted number of fields. It performs the function of an index. It is assigned to a process, for example, EDQA. It performs a pre-selection. The function performed is that of a sorter. The ODL pre-selection can be edited manually. The pre-selection may be at least one of edited, deleted or overruled. The ODLs can be used as a reference for searching items under consideration of its priority. The order types of the handled items, the criteria to filter, and to sort them can be freely configured. Filter and sorter are defined independent from the ODL. Selection can be aborted after the number of necessary items is reached. The selection from the ODL obeys the corresponding sort profile.
The ODL has a type. The ODL type defines the nature of items that can be contained in the ODL. For example, the types 'Obtain Confirmation (RCV)', 'Lose Confirmation (SPL)', and 'Free Work List (WLS)' are supported. The filter assigned to the ODL comprises a filter type and a filter variant. The filter type defines the criteria and the variant contains the values of the criteria to select the items. Per filter type several variants can be defined. The sorter assigned to the ODL contains the criteria to sort the items. Database objects as well as source code is generated out of the settings of an ODL. An ODL comprises a database table with a specific database index, specific source code for table access. The generated database table depends on the criteria that are used to calculate the item priority (sorter). The generated source code for selection from the ODL can be used, for example, by any SAP SCM application.

The ODLs of the type 'Free Work List' are defined without specifying a filter. The assignment of the sorter is optional. They are filled manually and can be used like a notepad for order items. Items can be added to this ODL in the display of the explanation component of the availability check, in the display of the backorder processing (BOP) result, or in the display of the work list. The situations where items can be added to work list ODLs are not restricted. These work list ODLs can be used as a work list of BOP.

In conventional systems, the complete selection of affected items from several database tables and LiveCache was necessary. Sorting the items was only possible after filtering them from database. No sort / filter based reference was available. In contrast, in accordance with embodiments of the present invention, it is possible to let the customizable filter work before storing the data in a reference table. Further, a quick item search by creating a customized database object is also possible. It is possible to allow creation of ODLs only if it is needed.

ODLs can be used at any place where pre-selected lists of orders or order items are necessary (e.g. out of performance reasons). ODLs can be used, for example, in SAP SCM: during event driven quantity assignment (EDQA) and also in back order processing as a reference to items that should be confirmed, during reassignment of quantity confirmations (ROC) as a reference to items that can lose their confirmations and during backorder processing as a work list. Using ODLs a list of items fulfilling the criteria of the filter are selected. The ODL provides an index in the database table, so that all data in the table can be accessed. For example, a sales order that may be stored in LiveCache or 10 database tables where there are around 500 to 800 fields. ODL are linked to the databases, the order ID is used as a key. By accessing the database using a key is fast. The index is used to pre-select very quickly. The index is defined by customizing based on the sorter definition. In this way, the system finds all items associated with the order for BOP.

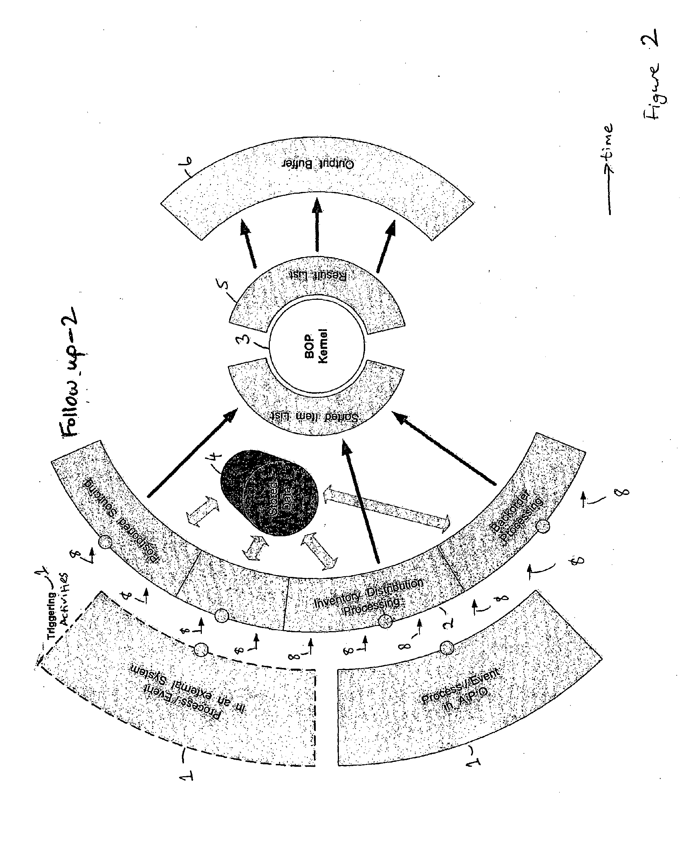

Figure 2 shows a process and its triggering activities. In particular, in figure 1 it is seen that depending on the activity 1 and the condition profile 8, a follow up process 2 is triggered. The event driven service links the activity 1 to the follow up process 2, also referred to as the event 2. The linking is determined by the condition profile 8. The condition profile is stored in a database 30. Examples of triggering activities and triggered events are given with respect to Figure 1. In Figure 2, the example, of back order processing (BOP) as a triggered event is taken in response to an activity such as stock changes 11 or quantity release in a sales order 12.. As shown in Figure 1 there is a flexible assignment of pre-defined activities 1to start follow up processes (also referred to as webflows). An agent 2 is provided, which is a tool that is related to BOP. The agent uses ODLs as input for confirmation of back ordered items after being triggered, by an activity 2, for example, by goods receipt. The agent uses a processor, in particular, BOP kernel 3 (a BOP based process step) and its output mechanism during the workflow. For example, in Figure 1, the triggering activity 1 may be a process/even in an external system, for example, a goods receipt. Once the goods are received, the agent is triggered, as the follow-up 2. The agent 2 reads the stored data in the data storage system 4 (in this case ODL). Subsequently, BOP is carried out by the BOP kernel 3. BOP is carried out when necessary. It may be carried out as a batch. The result list 5 of the BOP is provided to an output buffer 6, which is the SAP APO storage system. The result list in the output buffer is subsequently sent to the OLTP system.

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. The mere fact that certain measures are recited in mutually different claims does not indicate that a combination of these measures cannot be used to advantage.

## Claims

1. A system for automatically providing one or more event driven global available to promise services in a supply chain, the system comprising:
an inbound interface for interfacing with a plurality of data storage devices in at least one of which one or more documents are stored as data, wherein the one or more documents correspond to an activity;
an execution memory operable to hold a software system; and
a processor for coupling to the inbound interface and the execution memory, the processor being operable to execute the software system such that the software system operates:
to assign the activity to a follow up process on the basis of a condition profile.

2. A system according to claim 1, wherein the condition profile is stored in a database and defines a plurality of individual process categories.

3. A system according to claim 1 or 2, wherein the activity is one of at least a change in stock, a change in a purchase order, a confirmation of a high priority sales order and a quantity release in a sales order.

4. A system according to any of the preceding claims, wherein the follow up process is one of at least a change in category of a document, a quantity release to order due lists, a order confirmation at the cost of other documents, backorder processing and push deployment.

5. A system according to claim 4, wherein the change of category follow up process is linked to a change in stock in order to reserve the change in stock so that it is not visible in an availability check.

6. A system according to any of the preceding claims, wherein the event driven services are provided in real time.

7. A system according to any of the preceding claims 1-5, wherein the event driven services are provided after a predetermined time delay.

8. A system according to any of the preceding claims, wherein the follow up process is assigned to the activity and the conditions for the triggering of the follow up process are defined in the condition profile.

9. A computer implemented method of automatically providing one or more event driven global available to promise services in a supply chain, the method comprising:
interfacing with a plurality of data storage devices in at least one of which one or more documents are stored as data, wherein the one or more documents correspond to an activity;
holding a software system in an execution memory; and
coupling the inbound interface and the execution memory, the processor being operable to execute the software system such that the software system assigns the activity to a follow up process on the basis of a condition profile.

10. A user terminal comprising means operable to perform the method of claim 9.

11. A computer readable storage medium storing a program which when run on a computer controls the computer to perform the method of claim 9.
